# EUROPEAN PATENT SPECIFICATION

(11) **EP 2 327 628 B1**
(45) Date of publication and mention of the grant of the patent: **30.03.2016**
(21) Application number: 10192028.8
(22) Date of filing: 22.11.2010
(51) Int. Cl.: B64D 29/04

(54) **Methods and systems for minimizing flow disturbances in aircraft propeller blades caused by upstream pylons**
Verfahren und Systeme zur Minderung von durch vorgelagerte Triebwerkaufhängungen verursachte Strömungsstörungen in Flugzeugpropellerschaufeln
Procédés et systèmes pour minimiser les perturbations de flux dans des pales d'hélice d'avion occasionnées par des pylônes en amont

(30) Priority: 27.11.2009 ES 200931079
(43) Date of publication of application: 01.06.2011
(73) Proprietor: Airbus Operations S.L., 28906 Madrid (ES)
(72) Inventor: Verde Preckler, Jorge Pablo, 28045, Las Rozas, Madrid (ES); Caballero Asensio, María, 28230, Las Rozas, Madrid (ES); Gustavsson, Mats, 25250, Helsingborg, Suecia (SE)
(74) Representative: Elzaburu Marquez, Alberto

(56) References cited:
- US-A- 4 917 336
- US-A- 5 156 353

## Description

### FIELD OF THE INVENTION

This invention relates to aircraft having propulsion systems supported by upstream pylons and specifically to methods and systems for minimizing the effects of flow disturbances at the propeller blades caused by said pylons and particularly for reducing noise and vibration.

### BACKGROUND

Non-homogenous air inflow to propeller propulsion system will result in increased aero-acoustically generated noise from the propulsion system. A particular case is when the propulsion system is attached by a pylon to the aircraft fuselage structure with the propulsion system aft of the pylon. This arrangement will result in a pylon-induced disturbed flow at the propeller blades.

Methods to reduce the effect of the disturbed flow, preferred to as a "wake", are disclosed in US 5,156,353 [Gliebe and Majjigi], which is regarded as the closest prior art.US 4,917,336 [Jacobs and Shivashankara] and US 4,966,338 [Gordon]. Glieb and Majjigi describe some physics related to the wake behind a pylon structure and estimate the amount of air needed to be injected to "fill-out" the wake of their pylon arrangement at a determined flight condition. Consequently they propose an essentially static injection of gas that may be varied as the flight condition is changed.

Jacobs and Shivashankara are showing measured results for an arrangement essentially similar to the idea of Glieb and Majjigi, but also showing the effect of the radial position on the propeller, and claim protection for an engine mounting assembly to compensate this effect.

Gordon disclose the use of a "movable vane" to reduce the wake.

None of the three referenced patents take into account the dynamic response of the aircraft resulting from a disturbed flow into the propeller and consequently they do not achieve a significant reduction of noise and vibrations.

The present invention is intended to solve this problem.

### SUMMARY OF THE INVENTION

One object of the present invention is to provide methods (claims 1 and 3) and an aircraft with a system (claim 8) allowing the reduction of the dynamic response of an aircraft resulting from a disturbed flow arising from an upstream pylon supporting an aircraft propulsion system having propellers.

Another object of the present invention is to provide methods and systems allowing the reduction of noise and vibrations generated by an aircraft propulsion system having propellers rotating in a disturbed flow arising from an upstream pylon.

In one aspect, these and other objects are met by providing a method for minimizing the effects of pylon induced disturbances of the airflow at the propeller blades of propeller propulsion devices attached to an aircraft component by means of upstream pylons, comprising steps of:
- a) Injecting fluid on the zone of the propeller blades from the rear part of said pylons.
- b) Obtaining continuously the values of a first set of parameters indicative of the effects of said disturbances, such as acoustic pressure inside the aircraft structure (particularly in the passenger cabin) and/or at the exterior surface of the aircraft structure, vibration in the aircraft structure and vibration in the propeller blades.
- c) Adapting continuously the fluid injection output so that said disturbances are minimized using data obtained in step b).

In another aspect, the above-mentioned objects are met by providing a method for minimizing the effects of pylon induced disturbances of the airflow at the propeller blades of propeller propulsion devices attached to an aircraft component by means of upstream pylons, comprising steps of:
- a) Building models of the relations between fluid injection on the zone of the propeller blades from the rear part of said pylons and variations of one or more parameters of a first set of parameters indicative of the effects of said disturbances, such as acoustic pressure inside the aircraft structure (particularly in the passenger cabin) and/or at the exterior surface of the aircraft structure, vibration in the aircraft structure, vibration in the propeller blades, linked to one or more parameters of a second set of parameters indicative of the aircraft flight conditions, such as flight altitude, flight speed, propulsion power, propeller rotation speed and ambient temperature of the air.
- b) Injecting fluid on said zone determining the fluid injection output using the model corresponding to the current values of one or more parameters of said second set of parameters.

In a preferred embodiment the parameter used for determining the fluid injection output is the propeller rotation speed. Hereby it is achieved a method using a suitable reference signal for an easy and rapid regulation of the fluid injection.

In another preferred embodiment said models are updated using the values of parameters indicative of the effects of said disturbances. Hereby it is achieved a method that allows substantial and stable control of the fluid injection.

In another aspect, the above-mentioned objects are met by providing an aircraft having propeller propulsion devices with propeller blades attached to an aircraft component by means of upstream pylons comprising a system for minimizing the effects of pylon induced disturbances of the airflow at the propeller blades including:
a) Sensing means of a first set of parameters indicative of the effects of said disturbances, such as acoustic pressure inside the aircraft structure (particularly in the passenger cabin) and/or at the exterior surface of the aircraft structure, vibration in the aircraft structure, vibration in the propeller blades.
b) Fluid injection means in said pylons for injecting fluid on the zone of the propeller blades from the rear part of said pylons.
c) Control means for regulating the fluid injection output so that said disturbances are minimized.

In one preferred embodiment, said fluid injection means comprise various fluid dispensers individually controlled distributed along the trailing edge of said pylons. Hereby it is achieved a system allowing a variable fluid injection output along the pylon trailing edge.

Other features and advantages of the present invention will be understood from the following detailed description in relation with the enclosed drawings.

### BRIEF DESCRIPTION OF DRAWINGS

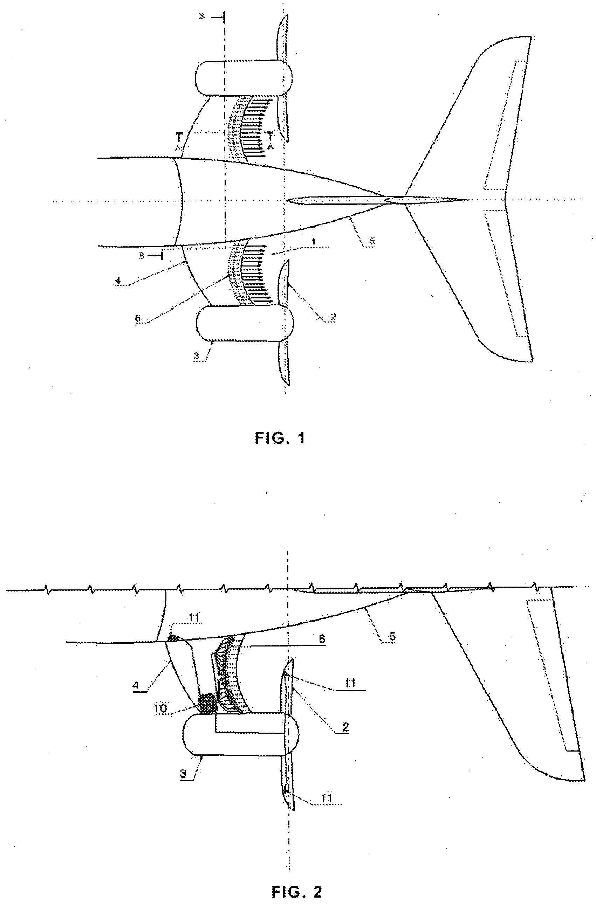

Figure 1 is a top plan view of an aircraft with a propulsion system aft of the pylon incorporating a system according to this invention
Figure 2 is a partial side view of an aircraft with a propulsion system aft of the pylon incorporating a system according to this invention.

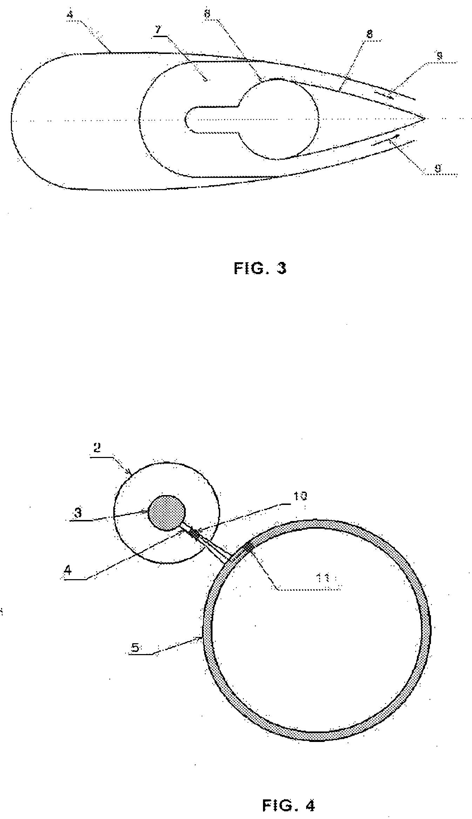

Figure 3 is a sectional view taken along line A-A of Figure 1 showing the schematic configuration of the fluid injection means used in a system according to this invention.
Figure 4 is a sectional view taken along line B-B of Figure 1 showing the sensing means used in a system according to this invention.

### DETAILED DESCRIPTION OF PREFERRED EMBODIMENTS

It is known from Aero-Acoustics theory that the sound generated by a propeller blade is typically dominated by the volume effect resulting in acoustic monopoles and the blade pressure effect resulting in acoustic di-poles. Both types of sources appear along the radius of the blades and are typically integrated over a radial segment of the blades.

A disturbed flow caused by a pylon structure will influence the Aero-Acoustics by means of the local density at the blades influencing the acoustic monopole, and the acoustic di-pole as a result of the blade pressure disturbance. The irregularity of the sound sources, as a result of the pylon induced disturbance of the flow, will give additional sound and dynamic unbalanced forces on the propulsion system. Also higher order Aero-Acoustic effects, such as resulting in acoustic quadro-poles, are likely to increase as a result of the disturbed flow at the region of the blades.

### Methods

In a preferred embodiment the present invention proposes a method that is capable of continuously adapting the control of the fluid injection, based on the output of a sensing system, that could be implemented using existing signal processing means and using essentially existing control algorithms. Most control algorithms are designed for minimizing a so called error function, which in this case typically includes, but not being limited to, the sensed dynamic response. One class of algorithms particularly suitable would be the gradient based Least Mean Squared methods. Another class of suitable algorithms are the called Recursive Least Square (RLS) control algorithms.

In another preferred embodiment the method according to the present invention uses a model of the relations between fluid injection and the resulting change of vibrations and sound. These models are very useful for achieving substantial and stable control.

Establishing such models may be made by flight testing in so called "offline" conditions, where the aim is not control of the vibration or sound, but to establish models based on a controlled, directly or indirectly, measurable quantity related to the fluid injection output and the dynamic response of the aircraft. Another option is to have a so called "on-line" system identification, where the models are determined in parallel with the control using a model updating algorithm in parallel with the control algorithms. The system identification algorithm may involve a secondary output of fluid injection not correlated with the fluid injection dictated by the control algorithm.

The implementation of the previous described methods is carried out preferably using at least one reference signal derived from a tachometer signal. Tachometer signals are typically in the form of a pulse occurring when a blade of a propeller is in a certain position. From a tachometer signal sinusoidal components, with a cycle time related to the time between two or more tachometer pulses, can be formed. Methods to continuously form and update reference signals are obvious to a person skilled in signal processing.

With a suitable reference signal the fluid injection can be rapidly regulated, to follow the frequency components contained in at least one reference signal. This can be made by the use of adaptive filters. Said adaptive filters relates the fluid dispenser output to the used reference signal, and can be continuously updated during operation of the control system based on the sensor signal output.

Updating of the said filters is made according to a control law implemented in the control unit. The previously mentioned model of the relation between the fluid injection and the dynamic response of the aircraft is a key in this respect for algorithms like the filtered X Least Mean Squared algorithm. It is likely that the relation between the fluid injection and the aircraft dynamic response depends on the flight condition. Increased adaptation speed and stability of the method can be achieved by having stored models linked to flight condition parameters. Access to flight parameters assure using appropriate model at each moment of operation, as well as control how the models are updated and re-stored. Both discrete models valid in a range of a flight condition parameter, or a combination of flight conditions, and models based on at least one continuous function can be considered to get an optimal compromise of performance, stability and system cost.

The prior art teaches that a fluid injection has a positive effect on the velocity in the zone of the propeller blades but there is a zone where the decrease in velocity continues (see for instance Fig. 8 of US 4,917,336). In order to counteract this effect, the present invention proposes the control of the frequency of dispensed flow according to flight condition data. This provides a frequency coupling in such a way that the decrease in velocity is limited or even removed for each different pressure chamber influence area in the blades.

### Systems

The invention relates to the reduction of noise and vibrations generated by an aircraft propulsion system 3 attached to the fuselage 5 through a pylon 4 having propeller blades 2 rotating in a disturbed flow 1 arising from said pylon 4 and proposes, in the preferred embodiment illustrated in the Figures, a system to reduce the dynamic response of an aircraft comprising means for providing a dynamically controlled fluid injection 9, means 11 for sensing the dynamic response of the aircraft, preferably both in terms of structural vibrations and acoustical responses in any fluid inside the airframe, and control means 10 for determining optimal fluid injection 9 as a function of the detected dynamic response.

The fluid injection means comprise at least one pressure chamber 7 with fluid at a higher pressure than the surrounding pressure, and at least one fluid dispenser 6 having a valve mechanism 8 to dispense fluid 9 in a controlled way.

In a preferred embodiment the fluid injection means comprise several separate fluid dispensers 6 and at least one pressure chamber 7 with fluid at a higher pressure than the surrounding pressure and at least one high speed dynamically controlled valve mechanism 8 to dispense fluid 9 through at least one fluid dispenser 6.

By the use of several fluid dispensers 6 the effectiveness of the injection of pressured fluid 9 on the airflow to compensate the disturbances 1 caused by the pylon 4, act in more zones on the propeller blades 2, not only in one specific zone as the device described in US 4,917,336. Further, the fluid dispensers 6 can be individually controlled to achieve optimal injection of fluid with respect to both time and location.

Several different methods can be used to sustain a relative constant pressure in the pressure chamber 7, e.g. by using so called "bleed air" from a turbo-machinery, this not being a part of the present invention.

High precision control of the fluid injection 9 is preferably achieved by the use of dynamic actuators, with devices based, for example, on material with piezo-electric effects having particular potential in terms of high speed precision motion, combined with high efficiency and no need for separate parts (as is needed by e.g. electro-dynamic actuators).

In a preferred embodiment a fluid dispenser 6 device could have one or more shell shaped structures with at least one layer of an active material such as a piezo-electric material. By applying a voltage to the piezo the shell shaped structure will deform primarily in a bending motion and regulate the flow resistance in a valve-like arrangement to adjust the amount of fluid passing through the fluid dispenser 6. The surface structure, as well as the shape of the shell structure may be designed to achieve optimal variability. One such property could be to achieve a very high flow resistance when the valve-like arrangement is at is closed position, another such property could be to get a large variation of the flow resistance with a small variation of the valve opening.

The sensing means 11 comprise standard sensors for sound and vibrations combined with suitable signal conditioning electronics. Weighting factors are typically applied to the electrical signals from the sensors to get quantities with a physical meaning, e.g. vibration velocity in meter per second, or sound pressure in Pascal (N/m2). Further weighting factors may be applied to attenuate sensors in a certain region, or to establish a relation between vibration levels and sound pressure levels. A special case is to use weighting factors for spatial filtering. Such spatial filtering can emphasis the detection of special response shapes, such as structural or acoustical eigenmodes, but also other spatial distributions of vibrations or sound pressure. By the use of weighting factors for the electrical sensor signals increased performance and stability of the control may be achieved.

The control means 10 comprise means for receiving signals from the above-mentioned sensing means 11 and/or signals from flight conditions sensors or controllers (providing information of parameters such as flight altitude, flight speed, propulsion power, propeller rotation speed, ambient temperature of the air) and processing means for obtaining the quantity of fluid necessary to obtain the most appropriate airflow to reduce the dynamic response of the aircraft.

Although the present invention has been fully described in connection with preferred embodiments, it is evident that modifications may be introduced within the scope thereof, not considering this as limited by these embodiments, but by the contents of the following claims.

## Claims

1. A method for minimizing the effects of pylon induced disturbances of the airflow at the propeller blades (2) of propeller propulsion devices (3) attached to an aircraft component (5) by means of upstream pylons (4), comprising steps of:
- a) injecting fluid on the zone of the propeller blades (2) from the rear part of said pylons (4);
- b) obtaining continuously the values of a first set of parameters indicative of the effects of said disturbances;
- c) adapting continuously the fluid injection output (9) so that said disturbances are minimized using data obtained in step b),
**characterized in that** said first set parameters comprise one or more of the following:
- acoustic pressure inside the aircraft structure and/or at the exterior surface of the aircraft structure;
- vibration in the aircraft structure;
- vibration in the propeller blades (2).

2. A method according to claim 1, **characterized in that** the value of said acoustic pressure inside the aircraft structure is obtained in the passenger cabin.

3. A method for minimizing the effects of pylon induced disturbances of the airflow at the propeller blades (2) of propeller propulsion devices (3) attached to an aircraft component (5) by means of upstream pylons (4), comprising steps of:
- a) building models of the relations between fluid injection on the zone of the propeller blades (2) from the rear part of said pylons (4) and variations of one or more parameters of a first set of parameters indicative of the effects of said disturbances linked to one or more parameters of a second set of parameters indicative of the aircraft flight conditions;
- b) injecting fluid on said zone determining the fluid injection output (9) using the model corresponding to the current values of one or more parameters of said second set of parameters,
**characterized in that** said first set parameters comprise one or more of the following:
- acoustic pressure inside the aircraft structure and/or at the exterior surface of the aircraft structure;
- vibration in the aircraft structure;
- vibration in the propeller blades (2).

4. A method according to claim 3, **characterized in that** the value of said acoustic pressure inside the aircraft structure is obtained in the passenger cabin.

5. A method according to any of claims 3-4, **characterized in that** said second set of parameters comprise one or more of the following:
- flight altitude;
- flight speed;
- propulsion power;
- propeller rotation speed obtained from a tachometer signal;
- ambient temperature of the air.

6. A method according to claim 5, **characterized in that** the parameter used for determining the fluid injection output (9) is the propeller rotation speed.

7. A method according to any of claims 3-6, **characterized in that** it also comprises steps of:
- c) obtaining the values of a first set of parameters indicative of the effects of said disturbances;
- d) updating said models using data obtained in step c).

8. Aircraft having propeller propulsion devices (3) with propeller blades (2) attached to an aircraft component (5) by means of upstream pylons (4), comprising a system for minimizing the effects of pylon induced disturbances of the airflow at the propeller blades (2), including:
a) sensing means (11) of a first set of parameters indicative of the effects of said disturbances;
b) fluid injection means in said pylons (4) for injecting fluid (9) on the zone of the propeller blades (2) from the rear part of said pylons (4);
c) control means (10) for regulating the fluid injection output (9) so that said disturbances are minimized,
**characterized in that** said first parameters comprise one or more of the following:
- acoustic pressure inside the aircraft structure and/or at the exterior surface of the aircraft structure;
- vibration in the aircraft structure;
- vibration in the propeller blades (2).

9. Aircraft according to claim 8, **characterized in that** the acoustic pressure inside the aircraft structure is the acoustic pressure inside the passenger cabin.

10. Aircraft according to any of claims 8-9, **characterized in that** said fluid injection means comprise at least one pressure chamber (7) connected with at least one fluid dispenser (6) having a valve (8) for regulating the quantity of the injected fluid (9).

11. Aircraft according to claim 10, **characterized in that** said fluid injection means comprise various fluid dispensers (6) distributed along the trailing edge of said pylons (4).

12. Aircraft according to any of claims 8-11, **characterized in that** said sensing means (11), said fluid injection means and said control means (10) are adapted for the execution of a method according to any of claims 1-7.

## Patentansprüche

1. Verfahren zur Minderung von durch Triebwerksaufhängungen induzierten Störungen der Luftströmung an den Propellerflügeln (2) von Propellerantriebsvorrichtungen (3), die an einer Flugzeugkomponente (5) mit Hilfe von vorgelagerten Triebwerksaufhängungen (4) befestigt sind, das die folgenden Schritte umfasst:
- a) Einspritzen von Fluid von dem hinteren Teil der Triebwerksaufhängungen (4) auf die Zone der Propellerflügel (2);
- b) kontinuierliches Gewinnen der Werte eines ersten Parametersatzes, der die Auswirkungen der Störungen anzeigt;
- c) kontinuierliches Anpassen der Fluideinspritzausgabe (9) unter Verwendung der in Schritt b) gewonnenen Daten, so dass die Störungen gemindert werden,
**dadurch gekennzeichnet, dass** der erste Parametersatz eines oder mehrere der Folgenden umfasst:
- den Schalldruck im Inneren der Flugzeugstruktur und/oder auf der Außenfläche der Flugzeugstruktur;
- Schwingungen in der Flugzeugstruktur;
- Schwingungen in den Propellerflügeln (2).

2. Verfahren nach Anspruch 1, **dadurch gekennzeichnet, dass** der Wert des Schalldrucks im Inneren der Flugzeugstruktur im Passagierraum gewonnen wird.

3. Verfahren zur Minderung der Auswirkungen von durch Triebwerksaufhängungen induzierten Störungen der Luftströmung an den Propellerflügeln (2) von Propellerantriebsvorrichtungen (3), die mit Hilfe von vorgelagerten Triebwerksaufhängungen (4) an einer Flugzeugkomponente (5) befestigt sind, das die folgenden Schritte umfasst:
- a) Erzeugen von Modellen der Beziehungen zwischen der Fluideinspritzung von dem hinteren Teil der Triebwerksaufhängungen (4) auf die Zone der Propellerflügel (2) und Änderungen eines oder mehrerer Parameter eines ersten Parametersatzes, der die Auswirkungen der Störungen anzeigt, die mit einem oder mehreren Parametern eines zweiten Parametersatzes verknüpft sind, der die Flugzeugflugbedingungen anzeigt;
- b) Einspritzen von Fluid auf die Zone, wobei die Fluideinspritzausgabe (9) unter Verwendung des Modells bestimmt wird, das den aktuellen Werten eines oder mehrerer Parameter des zweiten Parametersatzes entspricht,
**dadurch gekennzeichnet, dass** der erste Parametersatz eines oder mehrere der Folgenden umfasst:
- den Schalldruck im Inneren der Flugzeugstruktur und/oder auf der Außenfläche der Flugzeugstruktur;
- Schwingungen in der Flugzeugstruktur;
- Schwingungen in den Propellerflügeln (2).

4. Verfahren nach Anspruch 3, **dadurch gekennzeichnet, dass** der Wert des Schalldrucks im Inneren der Flugzeugstruktur im Passagierraum gewonnen wird.

5. Verfahren nach einem der Ansprüche 3 - 4, **dadurch gekennzeichnet, dass** der zweite Parametersatz eines oder mehrere der Folgenden umfasst:
- Flughöhe;
- Fluggeschwindigkeit;
- Antriebsleistung;
- Propellerdrehzahl, die aus einem Tachometersignal gewonnen wird;
- Umgebungstemperatur der Luft.

6. Verfahren nach Anspruch 5, **dadurch gekennzeichnet, dass** der Parameter, der zur Bestimmung der Fluideinspritzausgabe (9) verwendet wird, die Propellerdrehzahl ist.

7. Verfahren nach einem der Ansprüche 3 - 6, **dadurch gekennzeichnet, dass** es auch die folgenden Schritte umfasst:
- c) Gewinnen der Werte eines ersten Parametersatzes, der die Auswirkungen der genannten Störungen anzeigt;
- d) Aktualisieren der Modelle unter Verwendung der in Schritt c) gewonnenen Daten.

8. Flugzeug mit Propellerantriebsvorrichtungen (3) mit Propellerflügeln (2), die mit Hilfe von vorgelagerten Triebwerksaufhängungen (4) an einer Flugzeugkomponente (5) befestigt sind, das ein System zur Minderung der Auswirkungen von durch Triebwerksaufhängungen induzierten Störungen der Luftströmung an den Propellerflügeln (2) umfasst, welches umfasst:
a) Abtastmittel (11) für einen ersten Parametersatz, der die Auswirkungen der Störungen anzeigt;
b) Fluideinspritzmittel in den Triebwerksaufhängungen (4) zum Einspritzen von Fluid (9) von dem hinteren Teil der Triebwerksaufhängungen (4) auf die Zone der Propellerflügel (2);
c) Steuermittel (10) zum Regulieren der Fluideinspritzausgabe (9), so dass die Störungen gemindert werden,
**dadurch gekennzeichnet, dass** die ersten Parameter einen oder mehrere der Folgenden umfassen:
- den Schalldruck im Inneren der Flugzeugstruktur und/oder auf der Außenfläche der Flugzeugstruktur;
- Schwingungen in der Flugzeugstruktur;
- Schwingungen in den Propellerflügeln (2).

9. Flugzeug nach Anspruch 8, **dadurch gekennzeichnet, dass** der Schalldruck im Inneren der Flugzeugstruktur der Schalldruck im Inneren des Passagierraums ist.

10. Flugzeug nach einem der Ansprüche 8 - 9, **dadurch gekennzeichnet, dass** die Fluideinspritzmittel wenigstens eine Druckkammer (7) umfassen, die mit wenigstens einer Fluidabgabevorrichtung (6) mit einem Ventil (8) zum Regulieren der Menge des eingespritzten Fluids (9) verbunden ist.

11. Flugzeug nach Anspruch 10, **dadurch gekennzeichnet, dass** die Fluideinspritzmittel verschiedene Fluidabgabevorrichtungen (6) umfassen, die entlang des hinteren Rands der Triebwerksaufhängungen (4) verteilt sind.

12. Flugzeug nach einem der Ansprüche 8 - 11, **dadurch gekennzeichnet, dass** die Abtastmittel (11), die Fluideinspritzmittel und die Steuermittel (10) für die Ausführung eines Verfahren nach einem der Ansprüche 1 - 7 geeignet sind.

## Revendications

1. Procédé pour minimiser les effets de perturbations induites par un pylône de l'écoulement d'air au niveau des pales d'hélice (2) de dispositifs de propulsion à hélice (3) fixés à un composant d'aéronef (5) au moyen de pylônes amont (4), comprenant les étapes suivantes :
- a) injecter un fluide sur la zone des pales d'hélice (2) depuis la partie arrière desdits pylônes (4) ;
- b) obtenir en continu les valeurs d'un premier ensemble de paramètres représentant les effets desdites perturbations ;
- c) adapter en continu la puissance d'injection de fluide (9) de manière telle que lesdites perturbations sont minimisées en utilisant les données obtenues à l'étape b),
**caractérisé en ce que** ledit premier ensemble de paramètres comprend un ou plusieurs des éléments suivants :
- pression acoustique à l'intérieur de la structure de l'aéronef et/ou au niveau de la surface extérieure de la structure d'aéronef ;
- vibration dans la structure d'aéronef ;
- vibration dans les pales d'hélice (2).

2. Procédé selon la revendication 1, **caractérisé en ce que** la valeur de ladite pression acoustique à l'intérieur de la structure d'aéronef est obtenue dans la cabine passagers.

3. Procédé pour minimiser les effets de perturbations induites par un pylône de l'écoulement d'air au niveau des pales d'hélice (2) de dispositifs de propulsion à hélice (3) fixés à un composant d'aéronef (5) au moyen de pylônes amont (4), comprenant les étapes suivantes :
- a) construire des modèles des rapports entre l'injection de fluide sur la zone des pales d'hélice (2) depuis la partie arrière desdits pylônes (4) et les variations d'un ou de plusieurs paramètres d'un premier ensemble de paramètres représentant les effets desdites perturbations liées à un ou plusieurs paramètres d'un deuxième ensemble de paramètres représentant les conditions de vol de l'aéronef ;
- b) injecter un fluide sur ladite zone déterminant la puissance d'injection de fluide (9) en utilisant le modèle qui correspond aux valeurs courantes d'un ou de plusieurs paramètres dudit deuxième ensemble de paramètres,
**caractérisé en ce que** ledit premier ensemble de paramètres comprend un ou plusieurs des éléments suivants :
- pression acoustique à l'intérieur de la structure de l'aéronef et/ou au niveau de la surface extérieure de la structure d'aéronef ;
- vibration dans la structure d'aéronef ;
- vibration dans les pales d'hélice (2).

4. Procédé selon la revendication 3, **caractérisé en ce que** la valeur de ladite pression acoustique à l'intérieur de la structure d'aéronef est obtenue dans la cabine passagers.

5. Procédé selon l'une quelconque des revendications 3 à 4, **caractérisé en ce que** ledit deuxième ensemble de paramètres comprend un ou plusieurs des éléments suivants :
- altitude de vol ;
- vitesse de vol ;
- puissance de propulsion ;
- vitesse de rotation d'hélice obtenue à partir d'un signal de tachymètre ;
- température ambiante de l'air.

6. Procédé selon la revendication 5, **caractérisé en ce que** le paramètre utilisé pour déterminer la puissance d'injection de fluide (9) est la vitesse de rotation d'hélice.

7. Procédé selon l'une quelconque des revendications 3 à 6, **caractérisé en ce qu'**il comprend en outre les étapes suivantes :
- c) obtenir les valeurs d'un premier ensemble de paramètres représentant les effets desdites perturbations ;
- d) actualiser lesdits modèles en utilisant des données obtenues à l'étape c).

8. Aéronef comportant des dispositifs de propulsion à hélice (3) ayant des pales d'hélice (2) fixés à un composant d'aéronef (5) au moyen de pylônes amont (4), comprenant un système pour minimiser les effets de perturbations induites par un pylône de l'écoulement d'air au niveau des pales d'hélice (2), comprenant :
a) un moyen de mesure (11) d'un premier ensemble de paramètres représentant les effets desdites perturbations ;
b) un moyen d'injection de fluide dans lesdits pylônes (4) pour injecter un fluide (9) sur la zone des pales d'hélice (2) depuis la partie arrière desdits pylônes (4) ;
c) un moyen de commande (10) pour réguler la puissance d'injection de fluide (9) de manière telle que lesdites perturbations sont minimisées,
**caractérisé en ce que** lesdits premiers paramètres comprennent un ou plusieurs des éléments suivants :
- pression acoustique à l'intérieur de la structure de l'aéronef et/ou au niveau de la surface extérieure de la structure d'aéronef ;
- vibration dans la structure d'aéronef ;
- vibration dans les pales d'hélice (2).

9. Aéronef selon la revendication 8, **caractérisé en ce que** la pression acoustique à l'intérieur de la structure d'aéronef est la pression acoustique à l'intérieur de la cabine passagers.

10. Aéronef selon l'une quelconque des revendications 8 à 9, **caractérisé en ce que** ledit moyen d'injection de fluide comprend au moins une chambre de pression (7) connectée à au moins un distributeur de fluide (6) comportant une vanne (8) pour réguler la quantité du fluide injecté (9).

11. Aéronef selon la revendication 10, **caractérisé en ce que** ledit moyen d'injection de fluide comprend divers distributeurs de fluide (6) répartis le long du bord de fuite desdits pylônes (4).

12. Aéronef selon l'une quelconque des revendications 8 à 11, **caractérisé en ce que** ledit moyen de mesure (11), ledit moyen d'injection de fluide et ledit moyen de commande (10) sont adaptés pour l'exécution d'un procédé selon l'une quelconque des revendications 1 à 7.
